# EUROPEAN PATENT APPLICATION

(11) **EP 2 674 305 A1**
(43) Date of publication of application: **18.12.2013**
(21) Application number: 12744833.0
(22) Date of filing: 08.02.2012
(51) Int. Cl.: B60C 17/00, B60C 1/00, B60C 5/14, C08K 5/47, C08L 21/00

(54) **RUBBER LAMINATE, RUN FLAT TIRE, AND PNEUMATIC TIRE**

(30) Priority: 08.02.2011 JP 2011025307; 04.11.2011 JP 2011242716
(71) Applicant: Bridgestone Corporation, Tokyo 104-8340 (JP)
(72) Inventor: IWATA, Masashi, Kodaira-shi Tokyo 187-8531 (JP); KANO, Norihisa, Kodaira-shi Tokyo 187-8531 (JP); MAEKAWA, Kazuhiro, Kodaira-shi Tokyo 187-8531 (JP); OH, Jeeyoung, Kodaira-shi Tokyo 187-8531 (JP)
(74) Representative: Waldren, Robin Michael
(86) International application number: PCT/JP2012/000839
(87) International publication number: WO 2012/108196

(57) **Abstract**

Provided are: a rubber laminate having high adhesion between a rubber member including a non-diene rubber and a rubber member including a diene rubber; a run-flat tire obtained by using the rubber laminate, having high adhesion between a side-reinforcing rubber layer and an inner liner, with excellent run-flat durability; and a pneumatic tire including a color layer having high adhesion force to a side rubber while being excellent in stain resistance. The rubber laminate is obtained by laminating a rubber member *A* including a non-diene rubber and a rubber member *B* including a diene rubber on each other, the rubber member *A* and the rubber member *B* containing a vulcanization accelerator of the same type.

## Description

### TECHNICAL FIELD

The present invention relates to: a rubber laminate having high adhesion between a rubber member including a non-diene rubber and a rubber member including a diene rubber; a run-flat tire obtained by using the rubber laminate, having high adhesion between a side-reinforcing rubber layer and an inner liner, with excellent run-flat durability; and a pneumatic tire having high adhesion force to a side rubber and a color layer having excellent stain resistance.

### BACKGROUND ART

As a so-called run-flat tire capable of safely running over a certain distance even in an internal pressure-reduced state due to a puncture or the like, there is conventionally known a side-reinforced type run-flat tire in which a side-reinforcing rubber with a crescent-shaped section is provided on the inner surface of a carcass in a sidewall portion so as to enhance rigidity of the sidewall portion.

The run-flat tire generally has an inner liner disposed on the inner surface thereof. A rubber composition with low air permeability may be employed for use in the inner liner, so as to reduce the thickness of the inner liner while maintaining the air retention property required as a tire. Further, the reduction in thickness of the inner liner allows for significant reduction in the amount of heat generation of the inner liner itself and suppression of heat generation in the adjacent side-reinforcing rubber layer, to thereby improve run-flat durability.

As a method of reducing air permeability of the inner liner, it is known to be effective to use butyl rubber as the rubber composition for the inner liner, or to contain an inorganic filler of a specific aspect ratio in the inner liner (see Patent Literature 1).

Further, in recent years, there has been generally known, as a high-value added tire, a tire with a color layer formed for decorative purposes on the outside in the tire width direction of the side rubber in the sidewall portion.
However, the color layer involves a problem that the layer is discolored brown due to oil, antioxidant, or the like translated from the side rubber portion. In view of this, various technologies have been developed for the purpose of preventing such discoloration.

In order to suppress discoloration of the color layer, a butyl rubber (IIR) is generally used for the color layer. However, the butyl rubber has hardly no double bond in the molecules thereof, and thus has poor co-crosslinking with the side rubber adjacent to the color layer. Accordingly, a blended rubber prepared by blending butyl rubber with, for example, ethylene-propylene-diene terpolymer (EPDM) or with a natural rubber is used to improve durability.

Another way of suppressing the discoloration of the above color layer may include a method of providing a predetermined barrier layer between the side rubber and the color layer to thereby suppress diffusion of oil and an antioxidant.

For example, Patent Literature 2 discloses a pneumatic tire with a color layer that is relatively small in width but has good durability and discoloration suppressing effect (stain resistance), obtained by adjusting the compositions of the color layer and the barrier layer.

### CITATION LIST

### Patent Literature

PTL 1: JP-A 2004-276699
PTL 2: JP-A 2006-168616

### SUMMARY OF INVENTION

### (Technical Problem)

However, according to the art disclosed in Patent Literature 1, due to a large difference in vulcanization characteristics between the inner liner and the side-reinforcing rubber layer, it is difficult to ensure vulcanization adhesion, which leads to the peeling at the interface between the inner liner and side-reinforcing rubber layer during run-flat running of the tire. Therefore, there is a need for a technology that further improves run-flat durability.

Further, according to the art disclosed in Patent Literature 2, the barrier layer contains a diene-based polymer for the purpose of improving durability through co-crosslinking with an adjacent rubber, and thus the stain resistance of the color layer has been insufficient as well as the adhesion between the color layer and the adjacent rubber. Therefore, it is desired to develop a technology capable of effectively suppressing discoloration of the above color layer without impairing the adhesion between the color layer and the side rubber.

Accordingly, an object of the present invention is to solve the problems of the prior art described above, and to provide: a rubber laminate with high adhesion between a rubber member including a non-diene rubber and a rubber member including a diene rubber; a run-flat tire manufactured by using the rubber laminate having high adhesion between a side-reinforcing rubber layer and an inner liner and being excellent in run-flat durability; and a pneumatic tire having high adhesion to a side rubber with a color layer being excellent in stain resistance.

### (Solution to Problem)

In order to achieve the above object, the inventors of the present invention have conducted keen studies on a rubber laminate obtained by laminating a rubber member *A* and a rubber member *B* on each other, the rubber member *A* including a non-diene rubber, the rubber member *B* including a diene rubber, and have found out, as a result, that high adhesion can be achieved between the rubber members when the rubber members each contain a vulcanization accelerator of the same type, to thereby complete the present invention.

Further, the inventors have also found that the abovementioned rubber laminate can be applied to a run-flat tire so as to allow for improvement in adhesion between a side-reinforcing rubber layer and an inner layer, and the rubber laminate may also be applied to a pneumatic tire having a color layer on the side thereof, which can allows the color layer to be improved in stain resistance while having high adhesion to a side rubber.

That is, the rubber laminate according to the present invention includes: a rubber member *A* including a non-diene rubber; and a rubber member *B* including a diene rubber, the rubber member *A* and the rubber member *B* being laminated on each other,
in which the rubber member *A* and the rubber member *B* each contain a vulcanization accelerator of the same type.

According to a preferred embodiment of the rubber laminate of the present invention, the non-diene rubber is at least one of butyl-based rubber, acrylonitrile rubber, and ethylene-propylene copolymer.

According to the rubber laminate of the present invention, the vulcanization accelerator is preferably a thiazole vulcanization accelerator, and particularly preferably a dibenzothiazyldisulfide.

According to the rubber laminate of the present invention, the rubber member *A* preferably includes the vulcanization accelerator by at least 0.1 parts by mass or more per 100 parts by mass of a rubber component, and more preferably, by 0.5 parts to 3.0 parts by mass per 100 parts by mass of the rubber component.

According to the rubber laminate of the present invention, the rubber member *B* preferably includes the vulcanization accelerator by at least 0.1 parts by mass per 100 parts by mass of a rubber component, and more preferably, by 0.5 parts to 3.0 parts by mass per 100 parts by mass of the rubber component.

A run-flat tire according to the present invention includes: a pair of sidewall portions; a tread portion that continues from each of the sidewall portions; a carcass toroidally extending between the pair of bead portions to reinforce each of the portions; an inner liner disposed on the tire inner surface side of the carcass; and a pair of side-reinforcing rubber layers with a crescent-shaped cross-section disposed between the inner surface of the carcass of the sidewall portion and the inner liner,
in which the above rubber laminate is used, the inner liner is composed of the rubber member *A*, and the side-reinforcing rubber is composed of the rubber member *B*, and
in which the peeling resistance between the side-reinforcing rubber layer and the inner liner is at least 3.5 N/mm.

According to the run-flat tire of the present invention, the inner liner preferably has the air permeation coefficient of 6.0* 10⁻¹⁰ cm³·cm/cm²·sec·cmHg or smaller.

The pneumatic tire according to the present invention has a color layer formed on the outside of the tire side portion in the width direction across a barrier layer therebetween,
in which the rubber laminate according to any one of claims 1 to 7 is used, the barrier layer is composed of the rubber member *A*, and the rubber of the tire side portion is composed of the rubber member *B*.

### (Advantageous Effect of Invention)

The present invention can provide: a rubber laminate having high adhesion between a rubber member including a non-diene rubber and a rubber member including a diene rubber; a run-flat tire obtained by using the rubber laminate, having high adhesion between a side-reinforcing rubber layer and an inner liner, with excellent run-flat durability; and a pneumatic tire including a color layer having high adhesion force to a side rubber while being excellent in stain resistance.
Previously, it was assumed that it may be even better, for the purpose of improving the adhesion property, not to have the vulcanization accelerator contained in the rubber member including a diene rubber because the rubber member including a non-diene rubber and the rubber member including a diene rubber would then have a smaller difference therebetween in terms of vulcanization characteristics. However, it is surprising to see that the addition of the vulcanization accelerator to the rubber composition constituting the rubber member including a non-diene rubber is rather improved in adhesion performance between the rubber member including a non-diene rubber and the rubber member including a diene rubber. This may be considered ascribable to the fact that the adhesion property between the rubber members no longer depends upon the vulcanization characteristics of each member when the rubber members each contain a vulcanization accelerator of the same type.

### BRIEF DESCRIPTION OF DRAWINGS

The present invention will be further described below with reference to the accompanying drawings, wherein:
FIG. 1 is a sectional view of an embodiment of a run-flat tire according to the present invention; and
FIG. 2 is a cross sectional view of an embodiment of a pneumatic tire of the present invention.

### DESCRIPTION OF EMBODIMENTS

### <Rubber Laminate>

A rubber laminate according to the present invention includes: a rubber member *A* including a non-diene rubber; and a rubber member *B* including a diene rubber, the rubber member *A* and the rubber member *B* being laminated on each other, and has a feature in that the rubber member *A* and the rubber member B each contain a vulcanization accelerator of the same type.

The rubber member *A* forming the rubber laminate of the present invention includes a non-diene rubber.
Here, a non-diene rubber refers to rubber having substantially no double bond (specifically, 2.5 mol% or less) in the main chain thereof. Examples of a non-diene rubber include: butyl-based rubber (butyl rubber (IIR), halogenated butyl rubber); ethylene-propylene rubber (EPM, EPDM); urethane rubber (U); silicone rubber (Q); chlorosulfonated rubber (CSM); acrylic rubber (ACM); fluoro rubber (FKM); chlorosulfonated polyethylene; and the like.

Of those, the non-diene rubber may preferably be at least one of: butyl rubber, brominated butyl rubber; chlorinated butyl rubber, acrylonitrile rubber; and ethylene-propylene copolymer. This is because the use of these components may improve air impermeability of the rubber member *A* while ensuring barrier properties against antioxidants and the like, to thereby improve stain resistance.

The rubber member *B* forming the rubber laminate of the present invention includes diene rubber.
Here, the diene rubber refers to rubber having a double bond in the main chain thereof. Examples thereof include, in addition to natural rubber (NR), synthetic rubber such as polybutadiene rubber (BR), styrene-butadiene copolymer rubber (SBR), acrylonitrile-butadiene copolymer rubber (NBR), polychloroprene rubber (CR), and the like. These rubber components may be used alone or may be used in combination of two or more of them.

Examples of the vulcanization accelerator to be contained in the rubber member *A* and the rubber member *B* include: thiazole vulcanization accelerators such as dibenzothiazyl disulfide (DM), cyclohexylamine salt of mercaptobenzothiazole (CMBT), mercaptobenzothiazole (MBT), mercaptobenzothiazole zinc salt (ZnMBT), 2-(N,N-diethylthiocarbamoylthio)benzothiazole, and 2-(4'-morpholinodithio)benzothiazole (MDP); and thiuram vulcanization accelerators such as tetramethylthiuram disulfide (TMTD), tetraethylthiuram disulfide (TETD), tetrabutylthiuram disulfide (TBTD), tetrakis(2-ethylhexyl)thiuram disulfide (TOT), tetramethylthiuram monosulfide (TMTM), and dipentamethylenethiuram tetra sulfide (DPTT). Of those, thiazole vulcanization accelerators are preferred and dibenzothiazyl disulfide (DM) is particularly preferred. The adhesion between the rubber members is further improved when the rubber members *A* and *B* both contain a thiazole vulcanization accelerator, and this effect is particularly prominent when dibenzothiazyl disulfide (DM) is used. The vulcanization accelerator may be contained alone, or may be contained in combination of two or more of them.

The content of the vulcanization accelerator in the rubber member A is preferably at least 0.1 parts by mass per 100 parts by mass of the rubber component, and more preferably, 0.5 parts to 3.0 parts by mass per 100 parts by mass of the rubber component, for the purpose of effectively deriving adhesion properties. The content of less than 0.1 parts by mass is too small to achieve sufficient adhesion.

Further, the content of the vulcanization accelerator in the rubber member *B* is preferably at least 0.1 parts by mass per 100 parts by mass of the rubber component, and more preferably, 0.5 parts to 3.0 parts by mass per 100 parts by mass of the rubber component, for the purpose of effectively deriving adhesion properties. The content of less than 0.1 part by mass is too small to attain sufficient adhesion.

### <Run-flat Tire>

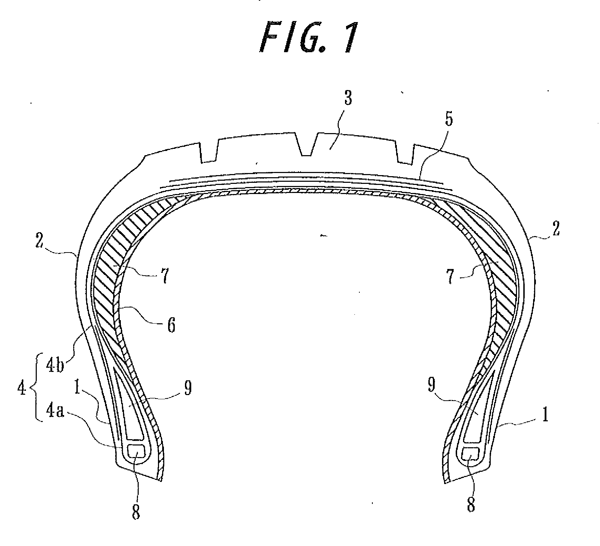

A run-flat tire of the present invention will now be described in detail with reference to the drawings. FIG. 1 is a sectional view illustrating an embodiment of the run-flat tire of the present invention.
As illustrated in FIG. 1, the run-flat tire of the present invention includes: a symmetrical pair of bead portions 1; a pair of sidewall portions 2; a tread portion 3 that continues from each of the sidewall portions 2; a radial carcass 4 toroidally extending between the pair of bead portions 1 to reinforce the portions 1, 2, and 3; a belt 5 composed of at least two belt layers which are disposed radially outside of the carcass 4; an inner liner 6 which is disposed on the inner surface side of the tire, opposite from the carcass 4; a pair of side-reinforcing rubber layers 7 with a crescent-shaped cross-section disposed between the innermost side of the carcass 4 of the side wall portion 2 and the inner liner 6; and a bead filler 9 disposed radially outside of a ring-shaped bead core 8 embedded in each of the bead portions 1.

In the run-flat tire as illustrated, the radial carcass 4 includes a turnup carcass ply 4a and a down carcass ply 4b. Both ends of the turnup carcass ply 4a are turned up around the bead core 8, to form a turnup end. Here, the structure and number of the plies forming the radial carcass 4 are not limited to the above. Further, the belt 5 of the run-flat tire as illustrated in the above includes a plurality of belt layers, but there is no particular limitation on the number of belt layers forming the belt 5 and the structure of the belt 5.

In the run-flat tire of the present invention, the rubber laminate of the present invention is employed for use as the inner liner 6 and the side-reinforcing rubber layer 7. Specifically, the rubber member A is employed for the inner liner 6 and the rubber member B is employed for the side-reinforcing rubber layer 7.
The rubber composition for use in the side-reinforcing rubber layer 7 and the rubber composition for use in the inner liner 6 each contain a vulcanization accelerator of the same type so as to obtain the peeling resistance of 3.5 N/mm or more between the side-reinforcing rubber layer 7 and the inner liner 6, to thereby improve adhesion between the side-reinforcing rubber layer 7 and the inner liner 6, which leads to the improvement of run-flat durability.
In contrast, when the rubber composition for use in the side-reinforcing rubber layer 7 and the rubber composition for use in the inner liner 6 contain vulcanization accelerators that are different from each other, the rubber compositions significantly differ from each other in vulcanization characteristics, which makes it difficult to ensure vulcanization adhesion, leading to a fear that peeling may occur at the interface between the inner liner 6 and the side-reinforcing rubber layer 7 during run-flat running of the tire. Further, in a case where the peeling resistance between the side-reinforcing rubber layer 7 and the inner liner 6 is less than 3.5 N/mm, there is a fear that peeling occurs at the interface between the inner liner 6 and the side-reinforcing rubber layer 7 during run-flat running of the tire.

The inner liner 6 preferably has an air permeability coefficient of 6.0 * 10⁻¹⁰ cm³·cm/cm²·sec·cmHg or smaller at 60 °C, and in this case, the inner liner 6 maintains air impermeability as compared to conventional inner liners, Here, when the inner liner 6 has an air permeability coefficient higher than 6.0 * 10⁻¹⁰ cm³·cm/cm²·sec·cmHg at 60 °C, the inner liner 6 is impaired in air impermeability as compared to the conventional case, which deteriorates the air retention property of the tire, seeing more changes in physical properties to occur over time in each member of the tire and reduction in durability of the belt. From the viewpoint of further improving the air retention property of the tire, and to reliably suppress the age-related deterioration of each tire member, the rubber composition for the inner liner may preferably have an air permeability coefficient of 5.0 * 10⁻¹⁰ cm³·cm/cm²·sec·cmHg or smaller at 60 °C.

The mass ratio (A_{R}/A_{I}) between the content (A_{R}) of the vulcanization accelerator in the rubber composition for use in the side-reinforcing rubber layer 7 per 100 parts by mass of the rubber component and the content (A_{I}) of the vulcanization accelerator in the rubber composition for use in the inner liner 6 per 100 parts by mass of the rubber component is preferably 0.1 or higher. The mass ratio in a range of 0.2 to 1.5 is particularly effective, and may more preferably be in a range of 0.4 to 1.1. The mass ratio (A_{R}/A_{I}) of 0.1 or higher allows for further improvement in adhesion between the side-reinforcing rubber layer 7 and the inner liner 6, which enables significant improvement in run-flat durability of the tire.

The rubber composition for use in the side-reinforcing rubber layer 7 preferably contains the vulcanization accelerator by at least 0.1 parts by mass per 100 parts by mass of the rubber component. The content of the vulcanization accelerator in a range of 0.2 parts to 1.5 parts by mass is particularly effective, and may even be more preferable when in a range of 0.4 parts to 1.1 parts by mass. The vulcanization accelerator contained in the rubber composition for use in the side-reinforcing rubber layer 7 by at least 0.1 parts by mass per 100 parts by mass of the rubber component allows for further improvement in adhesion between the side-reinforcing rubber layer 7 and the inner liner 6, which enables significant improvement in run-flat durability of the tire.

On the other hand, the rubber composition for use in the inner liner 6 preferably contains the vulcanization accelerator by at least 0.1 parts by mass per 100 parts by mass of the rubber component, and more preferably, by 0.2 parts to 2.0 parts per 100 parts by mass of the rubber component. The vulcanization accelerator contained in the rubber composition for use in the inner liner 6 by at least 0.1 parts by mass per 100 parts by mass of the rubber component, preferably by at least 0.2 parts by mass, and more preferably at least 0.5 parts by mass allows for further improvement in adhesion between the side-reinforcing rubber layer 7 and the inner liner 6, which enables significant improvement in run-flat durability of the tire.

The rubber composition for use in the inner liner 6 may preferably contain an inorganic filler. Here, the content of the inorganic filler is preferably at least 15 parts by mass per 100 parts by mass of the rubber component. A rubber composition containing a flat inorganic filler in the rubber component has high air-impermeability, since the flat inorganic filler inhibits the passage of air. The flat inorganic filler contained by less than 15 parts by mass per 100 parts by mass of the rubber component cannot produce much effect of improving the air impermeability of the inner liner. From the viewpoint of reliably improving the inner liner in air impermeability, the flat inorganic filler may further preferably be contained by at least 20 parts by mass per 100 parts by mass of the rubber component, and preferably be contained by not more than 100 parts by mass, while the upper limit thereof is not particularly limited.

The flat inorganic filler may be a layered mineral or platy mineral, without particularly limited as long as being flat, and may be a natural one or synthetic one. Examples of the mineral may include: hydrous composites such as kaolin clay, mica, feldspar, silica, and alumina; montmorillonite, saponite, hectorite, beidellite, stevensite, nontronite, vermiculite, and, with kaolin clay and mica being preferred, and kaolin clay being particularly preferred. These minerals may be used alone, or used in combination of two or more of them. Further, commercially available ones may also be suitably used.

The rubber compositions for the side reinforcement rubber layer 7 and for the inner liner 6 may contain, in addition to the aforementioned rubber components, the vulcanization accelerator, and the flat inorganic filler, compounding agents normally used in the rubber industry including: fillers such as carbon black; vulcanizing agents; antioxidants; scorch inhibitors; softeners; zinc oxides; stearic acids; and silane coupling agents, which may be selected as appropriate without harming the objective of the present invention. Further, those commercially available may also be suitably used as the aforementioned compounding agents. The rubber composition may be prepared by kneading, heating, extruding the rubber component with the compounding agents which are appropriately selected as necessary.

### <Pneumatic Tire>

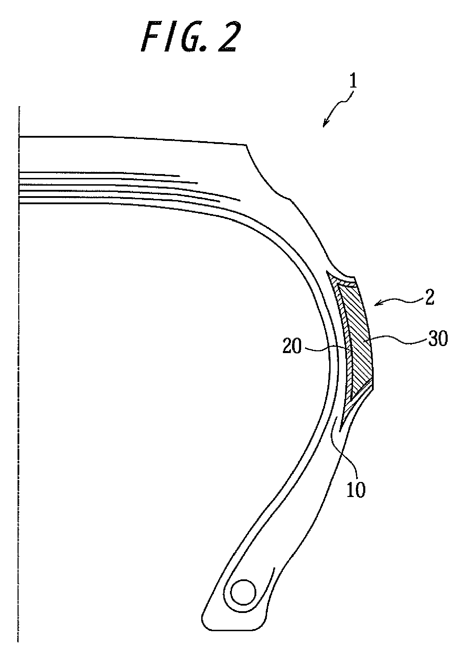

The configuration of the pneumatic tire of the present invention and reasons for limitation will now be described with reference to the drawings. FIG. 2 is a schematic view of an embodiment of the pneumatic tire of the present invention, which illustrates a part of the tread in section in the width direction.
According to the pneumatic tire of the present invention, as illustrated in FIG. 2, a pneumatic tire 100 includes, on the outside in the tire width direction of a side rubber 10 in a tire side part (sidewall portion 2 of FIG. 2), a color layer 30 formed across a barrier layer 20, in which the rubber laminate of the present invention is used, and the barrier layer 20 is composed of the rubber member A and the rubber forming the tire side portion is composed of the rubber member *B*.
Here, the tire side portion refers to a portion that lies on the side (portion that lies between the tread end and the bead portion) when viewed in section in the width direction of the tire.

### (Color Layer)

As illustrated in FIG. 2, the color layer formed in the pneumatic tire of the present invention refers to a rubber layer 30 formed on the side rubber 10 lying on the tire side portion, which is provided for the purpose of improving the design of the tire.

The rubber composition forming the color layer is not particularly limited, and may preferably contain, from the viewpoint of ensuring stain resistance, a rubber component including at least one of: butyl based rubber (butyl rubber (IIR), halogenated butyl rubber, and the like); ethylene-propylene rubber (EPM); acrylonitrile-butadiene rubber (NBR); chlorosulfonated polyethylene rubber (CSM); and urethane rubber (U). Further, preferred examples of the component forming the color layer may include: a water-based or oil-based epoxy, ester, acrylic components, which are generally used as a paint.

The aforementioned rubber component may include, as appropriate, other rubber components generally used for tires. Examples thereof may include at least one of: natural rubber (NR); isoprene rubber (IR); butadiene rubber (BR); styrene-butadiene rubber (SBR); chloroprene rubber (CR); and acrylonitrile-butadiene rubber (NBR).

In the case of forming, for example, a white rubber layer as the color layer, a white filler may be contained. The content thereof is preferably within a range of 40 parts to 120 parts by mass per 100 parts by mass of the rubber component, which is particularly preferable to be at least 60 parts by mass, and preferable to be not more than 100 parts by mass or less.

Examples of the white filler may include, for example, titanium oxide, magnesium oxide, calcium carbonate, magnesium carbonate, aluminum hydroxide, magnesium hydroxide, clay, and talc. For example, the use of titanium oxide produces an effect of preventing ultraviolet ray degradation of the rubber composition, in addition to the function of serving as the white filler, to thereby allow for improvement in color fastness and durability.

In the case of forming a layer of another color, coloring pigments such as blue, red, yellow, and green may be contained by approximately 0,5 parts to 30 parts by mass per 100 parts by mass of the rubber component, in place of the aforementioned white filler, or in combination with the white filler.

Further, the rubber composition constituting the color layer may further contain a crosslinking agent, a vulcanization accelerator, and the like. Preferred examples of the vulcanization accelerator may include: an organic peroxide and a sulfur-based vulcanizing agent, which may be contained, for example, in the amount within a range of 0.3 parts to 3.0 parts by mass per 100 parts by mass of the rubber component.

Example of the organic peroxide may include: benzoyl peroxide; dicumyl peroxide; di-t-butyl peroxide; t-butyl cumyl peroxide; methyl ethyl ketone peroxide; cumene hydroperoxide; and 2,5-dimethyl-2,5-di (t-butylperoxy) hexane. Examples of the sulfur-based vulcanizing agent may include, for example, sulfur and morpholine disulfide.

Examples of the vulcanization accelerator may include, for example, those containing at least one of: vulcanization accelerators based on sulfenamide, thiazole, thiuram, thiourea, guanidine, dithiocarbamate, aldehyde-amine, aldehyde-ammonia, imidazoline, and xanthate.

Further, softening agents may also be contained in the rubber composition in order to improve workability. Examples of the softening agents may include: petroleum-based softening agents such as process oil, lubricating oil, paraffin, liquid paraffin, petroleum asphalt, and vaseline; fatty oil-based softening agents such as castor oil, linseed oil, rapeseed oil, and coconut oil; waxes such as beeswax, carnauba wax, and lanolin; and further, tall oil; rubber substitute; linoleic acid; palmitic acid; stearic acid; and lauric acid.

In addition, there may also be used plasticizers such as, for example, DMP (dimethyl phthalate), DEP (diethyl phthalate), DBP (dibutyl phthalate), DHP (diheptyl phthalate), DOP (dioctyl phthalate), DINP (diisononyl phthalate), DIDP (diisodecyl phthalate), BBP (butyl benzyl phthalate), DLP (dilauryl phthalate), and DCHP (dicyclohexyl phthalate).

The rubber composition may contain scorch retarders for delaying or preventing scorch, and examples thereof may include: organic acids such as phthalic anhydride, salicylic acid, and benzoic acid; nitroso compounds such as N-nitrosodiphenylamine; and N-cyclohexyl-thio phthalimide.

As to the antioxidants, it is preferable to avoid the inclusion thereof in a rubber composition constituting the color layer because the antioxidants may cause discoloration of the color layer.

The rubber composition constituting the color layer preferably contains a silane coupling agent, which has an effect of strengthening the bond between a white-based reinforcing agent such as silica and a rubber component, and improving the dispersibility of the white-based reinforcing agent in the rubber composition. Here, silane coupling agents having, for example, thiol, amine, and halogen groups may preferably be used alone or in combination.

The thickness of the color layer in the tire width direction, which is not particularly limited, may preferably be defined to fall within a range of 0.5 mm to 3.0 mm, because the thickness smaller than 0.5 mm may fail to sufficiently ensure design characteristics while the thickness exceeding 3,0 mm may lead to increase in manufacturing costs.

### (Barrier Layer)

FIG. 2 illustrates a layer 20 as the barrier layer formed in the pneumatic tire of the present invention. The layer 20 is formed between the side rubber 10 and the color layer 30 on the tire side portion, so as to ensure adhesion between the side rubber 10 and the color layer 30 and to suppress the entrance of the antioxidant or the like into the color layer 30. In addition, the rubber member A needs to be employed for forming the barrier layer 20.

It is not particularly limited whether or not the barrier layer is colored. For example, a white filler may be contained to form the barrier layer as a white layer, and coloring pigments may be contained, as necessary, to form the barrier layer as a layer in other colors. Alternatively, carbon black may be contained as in the case of the side rubber. The content of the filler is not particularly limited either.

The rubber composition constituting the barrier layer further contains a crosslinking agent, in addition to the vulcanization accelerator. Preferred examples of the crosslinking agent include: organic peroxides and sulfur-based vulcanizing agents, which may be contained, for example, within a range of 0.3 parts to 3.0 parts by mass per 100 parts by mass of the rubber component. Examples of the organic peroxide may include: benzoyl peroxide; dicumyl peroxide; di-t-butyl peroxide; t-butyl cumyl peroxide; methyl ethyl ketone peroxide; cumene hydroperoxide; and 2,5-dimethyl-2,5-di(t-butylperoxy) hexane. In addition, examples of the sulfur-based vulcanizing agent may include: sulfur and morpholine disulfide.

Further, softening agents may also be contained in the rubber composition in order to improve workability. The softening agents contained in the rubber composition constituting the color layer mentioned above may also be similarly used in the rubber composition forming the barrier layer. Furthermore, the plasticizers, the scorch retarders, and the silane coupling agents may be similarly employed as in the case of the rubber composition constituting the color layer mentioned above.

The rubber composition constituting the barrier layer contains no antioxidant, because the antioxidant may cause discoloration of the color layer.

The thickness of the barrier layer in the tire width direction, which is not particularly limited, may preferably be defined to fall within a range of 0.5 mm to 3.0 mm, because the thickness smaller than 0.5 mm may fail to ensure stain resistance whereas the thickness exceeding 3.0 mm may lead to increase in manufacturing costs.

### (Rubber of Tire Side Portion)

Rubber disposed on the tire side portion refers a rubber member for forming tire side portions such as side wall portion 2 of the pneumatic tire 1 as illustrated in FIG. 2, and examples thereof include the side rubber 10. In the pneumatic tire 1 of the present invention, the color layer 30 is formed on the outside of the tire width direction across the barrier layer 20 therebetween. The rubber member *B* needs to be employed for forming the rubber on the tire side portion (the side rubber 10 of FIG. 2).

### EXAMPLES

The present invention is described in more detail with reference to the examples below, but there is no intension of limiting the present invention to the following examples.

### <Examples 1 to 10, Comparative Examples 1 to 6>

Rubber compositions for the side-reinforcing rubber layer were prepared based on the formulations shown in Table 1. Further, rubber compositions for the inner liner were prepared based on the formulations shown in Table 2. The rubber compositions thus prepared were measured for the air permeability coefficient according to the following method. The results thereof are shown in Table 2.

### (1) Air Permeability Coefficient

Samples obtained by vulcanizing the rubber compositions at 160 °C for 30 minutes were measured for the air permeability coefficient at 60 °C by using the air permeation tester M-Cl (manufactured by TOYO SEIKI Co., Ltd.).

[Table 1]

**[Table 1]**

| Rubber Composition for Side-Reinforcing Rubber Layer | | | | | | | | | | |
|---|---|---|---|---|---|---|---|---|---|---|
| | | | Rubber Composition A | Rubber Composition B | Rubber Composition C | Rubber Composition D | Rubber Composition E | Rubber Composition F | Rubber Composition G | Rubber Composition H |
| Formulation | Natural Rubber | Parts by Mass | 50.0 | 50.0 | 50.0 | 50.0 | 50.0 | 50.0 | 50.0 | 50.0 |
| | Synthetic Rubber *1 | | 50.0 | 50.0 | 50.0 | 50.0 | 50.0 | 50.0 | 50.0 | 50.0 |
| | Carbon Black *2 | | 50.0 | 50.0 | 50.0 | 50.0 | 50.0 | 50.0 | 50.0 | 50.0 |
| | Antioxidant *3 | | 3.0 | 3.0 | 3.0 | 3.0 | 3.0 | 3.0 | 3.0 | 3.0 |
| | Resin *4 | | 3.0 | 3.0 | 3.0 | 3.0 | 3.0 | 3.0 | 3.0 | 3.0 |
| | Zinc Oxide | | 5.0 | 5.0 | 5.0 | 5.0 | 5.0 | 5.0 | 5.0 | 5.0 |
| | Sulfur | | 7.0 | 7.0 | 7.0 | 7.0 | 7.0 | 7.0 | 7.0 | 7.0 |
| | Vulcanization Accelerator DM *5 | | 0.1 | 0.2 | 0.4 | 0.7 | 1.1 | 0.0 | 0.0 | 0.0 |
| | Vulcanization Accelerator X *6 | | 3-0 | 3.0 | 3.0 | 3.0 | 3.0 | 3.0 | 3.4 | 4.1 |

| | | | | | | | | | | |
|---|---|---|---|---|---|---|---|---|---|---|
| *1 Polybutadiene rubber, "BR01" manufactured by JSR Corporation *2 "N550" manufactured by Asahi Carbon Co., Ltd. *3 N-(1,3-dimethyl-butyl)-N'-phenyl-p-phenylenediamine, "Nocrac 6C" manufactured by Ouchi Shinko Chemical Industry Co., Ltd. *4 "Nisseki Neorejin" manufactured by Nippon Petrochemicals Co., Ltd. *5 Dibenzothiazyl disulfide, "Nocceler DM-P" manufactured by Ouchi Shinko Chemical Industry Co., Ltd. *6 N-cyclohexyl-2-benzothiazolylsulfenamide, "Nocceler CZ-G" manufactured by Ouchi Shinko Chemical Industry Co., Ltd. | | | | | | | | | | |

**[Table 2]**

| Rubber Composition for Inner Liner | | | | |
|---|---|---|---|---|
| | | | Rubber Composition X | Rubber Composition Y |
| Formulation | Natural Rubber | Parts by Mass | 40.0 | - |
| | Butyl Rubber *7 | | 60.0 | 100.0 |
| | Carbon Black *2 | | 65.0 | 45.0 |
| | Kaolin Clay *8 | | - | 20.0 |
| | Spindle Oil *9 | | 10.0 | 5.0 |
| | Zinc Oxide | | 0.5 | 3.0 |
| | Resin *10 | | 1.0 | 2.0 |
| | Vulcanization Accelerator DM *5 | | 1.0 | 1.0 |
| | Vulcanization Accelerator Y *11 | | - | 0.5 |
| | Sulfur | | 0.5 | 0.5 |
| Evaluation | Air Permeability Coefficient | (cm³·cm / cm²·sec· cmHg) | 10.0 × 10⁻¹⁰ | 2.0 × 10⁻¹⁰ |

| | | | | |
|---|---|---|---|---|
| *7 "Bromobutyl" manufactured by JSR Corporation *2 "N550" manufactured by Asahi Carbon Co., Ltd. *8 "POLYFIL DL" manufactured by J.M. Huber Corporation *9 "No. 2 spindle oil" manufactured by Idemitsu Kosan Co., Ltd. *10 "Nisseki Neorejin" manufactured by Nippon Petrochemicals Co., Ltd. *5 Dibenzothiazyl disulfide, "Nocceler DM-P" manufactured by Ouchi Shinko Chemical Industry Co., Ltd. *11 N-tert-butyl-2-benzothiazolylsulfenamide, "Nocceler NS-P" manufactured by Ouchi Shinko Chemical Industry Co., Ltd. | | | | |

The rubber compositions of Table 1 and the rubber compositions of Table 2 were respectively applied to the side-reinforcing rubber layer and the inner liner in combinations shown in Tables 3 and 4, and radial tires each having the structure shown in FIG. 1 with the size of 215/45ZR17 were manufactured according to a conventional method. The tires were measured for the peeling resistance and run-flat durability by the following method. The results thereof are shown in Tables 3 and 4.

### (2) Peeling Resistance

The side-reinforcing rubber layer and the inner liner were bonded together and vulcanized to prepare sample strips having a width of 20 mm. A peel test was conducted at the interface between the side-reinforcing rubber layer and the inner liner of each sample to measure the force generated at that time. Further, in order to facilitate comparison, the results were shown as indices where an index of 100 represents the value of the peeling resistance of Example 1. A larger index number indicates a higher peeling resistance.

### (3) Run-flat Durability

Each sample tire was assembled to a rim under ordinary pressure, filled to an internal pressure of 230 kPa, and allowed to stand for 24 hours at a room temperature of 38 °C. Then, the valve core was removed to equalize the internal pressure to the atmospheric pressure, and the tires were each subjected to a drum driving test under the conditions of: the load: 4.17 kN; the speed: 89 km/h; and the room temperature: 38 °C. The running distance until failure was measured under the aforementioned conditions, and the results were shown as indices where an index of 100 represents the value of the of run-flat durability of Comparative Example 1. A larger index number indicates a better run-flat durability.

**[Table 3]**

| | | Example 1 | Example 2 | Example 3 | Example 4 | Example 5 | Comparative Example 1 | Comparative Example 2 | Comparative Example 3 |
|---|---|---|---|---|---|---|---|---|---|
| Rubber composition applied to side-reinforcing rubber layer | - | Rubber Composition A | Rubber Composition B | Rubber Composition C | Rubber Composition D | Rubber Composition E | Rubber Composition F | Rubber Composition G | Rubber Composition H |
| Content of thiazole vulcanization accelerator in the rubber composition (A_{R}) | parts by mass | 0.1 | 0.2 | 0.4 | 0.7 | 1.1 | 0.0 | 0.0 | 0.0 |
| Rubber composition applied to inner liner | - | Rubber Composition X | Rubber Composition X | Rubber Composition X | Rubber Composition X | Rubber Composition X | Rubber Composition X | Rubber Composition X | Rubber Composition X |
| Content of thiazole vulcanization accelerator in the rubber composition (A_{I}) | parts by mass | 1.0 | 1.0 | 1.0 | 1.0 | 1.0 | 1.0 | 1.0 | 1.0 |
| Mass ratio of vulcanization accelerator (A_{R}/A_{I}) | - | 0.1 | 0.2 | 0.4 | 0.7 | 1.1 | 0.0 | 0.0 | 0.0 |
| Peeling Resistance | N/mm | 3.50 | 4.03 | 4.73 | 8.05 | 9.63 | 3.15 | 3.15 | 3.15 |
| | Index | 100 | 115 | 135 | 230 | 275 | 90 | 90 | 90 |
| Run-flat Durability | Index | 100 | 127 | 149 | 253 | 303 | 40 | 40 | 40 |

**[Table 4]**

| | | Example 6 | Example 7 | Example 8 | Example 9 | Example 10 | Comparative Example 4 | Comparative Example 5 | Comparative Example 6 |
|---|---|---|---|---|---|---|---|---|---|
| Rubber composition applied to side-reinforcing rubber layer | - | Rubber Composition A | Rubber Composition B | Rubber Composition C | Rubber Composition D | Rubber Composition E | Rubber Composition F | Rubber Composition G | Rubber Composition H |
| Content of thiazole vulcanization accelerator in the rubber composition (A_{R}) | Parts by Mass | 0.1 | 0.2 | 0.4 | 0.7 | 1-1 | 0.0 | 0.0 | 0.0 |
| Rubber composition applied to inner liner | - | Rubber Composition Y | Rubber Composition Y | Rubber Composition Y | Rubber Composition Y | Rubber Composition Y | Rubber Composition Y | Rubber Composition Y | Rubber Composition Y |
| Content of thiazole vulcanization accelerator in the rubber composition (A_{I}) | Parts by Mass | 1.0 | 1.0 | 1.0 | 1.0 | 1.0 | 1.0 | 1.0 | 1.0 |
| Mass ratio of vulcanization accelerator (A_{R}/A_{I}) | - | 0.1 | 0.2 | 0.4 | 0.7 | 1.1 | 0.0 | 0.0 | 0.0 |
| Peeling | N/mm | 3.7 | 4.27 | 4.98 | 8.54 | 10.10 | 3.27 | 3.27 | 3.27 |
| Resistance | Index | 106 | 122 | 142 | 244 | 289 | 93 | 93 | 93 |
| Run-flat durability | Index | 110 | 134 | 156 | 268 | 318 | 60 | 60 | 60 |

Tables 3 and 4 show that the run-flat tire of the side-reinforced type can be improved in adhesion between the side-reinforcing rubber layer and the inner layer, which significantly improves run-flat durability, when the rubber composition for the side-reinforcing rubber layer and the rubber composition for the inner liner both contain the same vulcanization accelerator and further, the peeling resistance between the side-reinforcing rubber and the inner liner is set to be higher than a specific value.

### <Examples 11 to 17, Comparative examples 7 to 11>

The components shown in Tables 5a and 5b, excluding sulfur and vulcanization accelerator, were mixed and kneaded at about 130 °C for 3.0 minutes using a kneader. Then, sulfur and a vulcanization accelerator were added, and the components were mixed and kneaded at about 100 °C for an additional 2.0 minutes with a biaxial open roller, and removed as a sheet including a barrier layer and a rubber layer in a predetermined thickness. Sample pieces for Examples and Comparative Examples were prepared from the sheet.

### (Evaluation)

### (1) Stain Resistance

Rubber laminates each including, between contaminated rubber including a certain amount of contaminant and white rubber, the sample piece prepared for each of Examples and Comparative Examples were vulcanized, and the laminate thus vulcanized was measured, by using a spectrophotometer CM-700d (manufactured by Konica Minolta, Inc.), for chromatic deviation on the white rubber surface before and after being placed in a thermostatic bath of 100 °C for 48 hours, to thereby evaluate the stain resistance. Evaluation results are shown in Tables 5a and 5b.
Here, the evaluation results on the stain resistance are shown as relative values with reference to the stain resistance of Comparative Example 7 which is defined as 100. A larger relative value shows higher stain resistance, meaning a better result.

### (2) Adhesion

Evaluation samples were prepared and evaluated according to JIS K 6256 for the sample pieces prepared for each Example and Comparative Example, to thereby evaluate the adhesion to an adjacent rubber. The evaluation results are shown in Tables 5a and 5b.
Further, the evaluation results on the adhesion to an adjacent rubber are shown as relative values with reference to the stain resistance of Example 16 which is defined as 100. A larger value shows higher stain resistance, meaning a better result.

**[Table 5a]**

| | | | Example 11 | Example 12 | Example 13 | Example 14 | Example 15 | Example 16 | Example 17 |
|---|---|---|---|---|---|---|---|---|---|
| Barrier Layer | Natural Rubber | Parts by Mass | - | - | - | - | - | - | - |
| | Butyl Rubber ^{*1} | | 100 | 100 | 100 | 100 | 100 | 100 | 100 |
| | Carbon Black ^{*2} | | 20 | 20 | 20 | 20 | 20 | 20 | 20 |
| | Zinc Oxide | | 3 | 3 | 3 | 3 | 3 | 3 | 3 |
| | Thiazole Vulcanization Accelerator ^{*4} | | 2 | - | - | - | - | - | - |
| | Sulfenamide Vulcanization Accelerator ^{*5} | | - | 2 | - | - | - | - | - |
| | Thiuram Vulcanization Accelerator ^{*6} | | - | - | 2 | - | - | - | - |
| | Guanidine Vulcanization Accelerator ^{*7} | | - | - | - | 2 | - | - | - |
| | Aldehyde-Ammonia Vulcanization Accelerator | | - | - | - | - | 2 | 0.3 | 4 |
| | Sulfur | | 1 | 1 | 1 | 1 | 1 | 1 | 1 |
| | Stearic Acid ^{*3} | | 1 | 1 | 1 | 1 | 1 | 1 | 1 |
| Adjacent Rubber | Natural Rubber | Parts by Mass | 100 | 100 | 100 | 100 | 100 | 100 | 100 |
| | Carbon Black ^{*2} | | 60 | 60 | 60 | 60 | 60 | 60 | 60 |
| | Zinc Oxide | | 5 | 5 | 5 | 5 | 5 | 5 | 5 |
| | Thiazole Vulcanization Accelerator ^{*4} | | 2 | - | - | - | - | - | - |
| | Sulfenamide Vulcanization Accelerator ^{*5} | | - | 2 | - | - | - | - | - |
| | Thiuram Vulcanization Accelerator ^{*6} | | - | - | 2 | - | - | - | - |
| | Guanidine Vulcanization Accelerator ^{*7} | | - | - | - | 2 | - | - | - |
| | Aldehyde-Ammonia Vulcanization Accelerator | | - | - | - | - | 2 | 0.3 | 4 |
| | Sulfur | | 5 | 5 | 5 | 5 | 5 | 5 | 5 |
| | Stearic Acid ^{*3} | | 1 | 1 | 1 | 1 | 1 | 1 | 1 |
| Stain Resistance | | | 103 | 101 | 100 | 102 | 101 | 100 | 101 |
| Adhesion to Adjacent Rubber | | | 111 | 112 | 111 | 113 | 112 | 100 | 103 |

**Table 5b**

| | | | Comparative Example 7 | Comparative Example 8 | Comparative Example 9 | Comparative Example 10 | Comparative Example 11 |
|---|---|---|---|---|---|---|---|
| Barrier Layer | Natural Rubber | Parts by Mass | - | - | - | - | 20 |
| | Butyl Rubber ^{*1} | | 100 | 100 | 100 | 100 | 70 |
| | Carbon Black ^{*2} | | 20 | 20 | 20 | 20 | 20 |
| | Zinc Oxide | | 3 | 3 | 3 | 3 | 3 |
| | Thiazole Vulcanization Accelerator ^{*4} | | - | - | - | - | - |
| | Sulfenamide Vulcanization Accelerator ^{*5} | | - | - | - | - | - |
| | Thiuram Vulcanization Accelerator ^{*6} | | - | - | - | - | - |
| | Guanidine Vulcanization Accelerator ^{*7} | | - | - | - | - | - |
| | Aldehyde-Ammonia Vulcanization Accelerator | | 2 | 2 | 2 | 2 | 2 |
| | Sulfur | | 1 | 1 | 1 | 1 | 1 |
| | Stearic Acid ^{*3} | | 1 | 1 | 1 | 1 | 1 |
| Adjacent Rubber | Natural Rubber | Parts by Mass | 100 | 100 | 100 | 100 | 100 |
| | Carbon Black ^{*2} | | 60 | 60 | 60 | 60 | 60 |
| | Zinc Oxide | | 5 | 5 | 5 | 5 | 5 |
| | Thiazole Vulcanization Accelerator ^{*4} | | 2 | - | - | - | - |
| | Sulfenamide Vulcanization Accelerator ^{*5} | | - | 2 | - | - | - |
| | Thiuram Vulcanization Accelerator ^{*6} | | - | - | 2 | - | - |
| | Guanidine Vulcanization Accelerator ^{*7} | | - | - | - | 2 | 2 |
| | Aldehyde-Ammonia Vulcanization Accelerator | | - | - | - | - | - |
| | Sulfur | | 5 | 5 | 5 | 5 | 5 |
| | Stearic Acid ^{*3} | | 1 | 1 | 1 | 1 | 1 |
| Stain Resistance | | | 100 | 100 | 101 | 100 | 88 |
| Adhesion to Adjacent Rubber | | | 83 | 85 | 86 | 85 | 92 |

| | | | | | | | |
|---|---|---|---|---|---|---|---|
| *1 Bromobutyl 2255 manufactured by JSR Corporation *2 #55-NP manufactured by Asahi Carbon Co., Ltd. *3 MXST manufactured by Miyoshi Oil & Fat Co., Ltd. *4 Sanceler DM-TG manufactured by Sanshin Chemical Industry Co., Ltd., Sanceler M manufactured by Sanshin Chemical Industry Co., Ltd. *5 Sanceler CM-G manufactured by Sanshin Chemical Industry Co., Ltd., Nocceler NS-P manufactured by Ouchi Shinko Chemical Industrial Co., Ltd., Nocceler DZ manufactured by Ouchi Shinko Chemical Industrial Co., Ltd. *6 Nocceler TOT-N manufactured by Ouchi Shinko Chemical Industrial Co., Ltd., TBzTD manufactured by Puyang Willing Chemicals Co., Ltd. in Industry and commercial Model Zone, Puyang City, China *7 SOXINOL D-G manufactured by Sumitomo Chemical Co., Ltd. | | | | | | | |

The results shown in Tables 5a and 5b reveal that Examples 11 to 17 all have high stain resistance and excellent adhesion to the side rubber. Further, Examples 11 to 17 are found to have no rubber scorch occurring during tire manufacture. On the other hand, Comparative Examples were insufficient in adhesion.

### INDUSTRIAL APPLICABILITY

According to the present invention, there are provided a rubber laminate with high adhesion between a rubber member including a non-diene rubber and a rubber member including a diene rubber; a run-flat tire produced by using the rubber laminate, having high adhesion between a side-reinforcing rubber layer and an inner liner, with excellent run-flat durability; and a pneumatic tire including a color layer having high adhesion to a side rubber while being excellent stain resistance. As a result, the run-flat tire and the pneumatic tire thus provided can be used for a longer time period, which provides useful industrial effects.

### REFERENCE SIGNS LIST

- 1: bead portion
- 2: sidewall portion
- 3: tread portion
- 4: radial carcass
- 4a: turnup carcass ply
- 4b: down carcass ply
- 5: belt
- 6: inner liner
- 7: side-reinforcing rubber layer
- 8: bead core
- 9: bead filler
- 10: side rubber
- 20: barrier layer
- 30: color layer
- 100: pneumatic tire
- 200: sidewall portion

## Claims

1. A rubber laminate, comprising: a rubber member *A* including a non-diene rubber; and a rubber member *B* including a diene rubber, the rubber member *A* and the rubber member *B* being laminated on each other,
wherein the rubber member *A* and the rubber member *B* each contain a vulcanization accelerator of the same type.

2. The rubber laminate according to claim 1, wherein the non-diene rubber comprises at least one of butyl-based rubber, acrylonitrile rubber, and ethylene-propylene copolymer.

3. The rubber laminate according to claim 1, wherein the vulcanization accelerator comprises a thiazole-based vulcanization accelerator.

4. The rubber laminate according to claim 3, wherein the vulcanization accelerator comprises dibenzothiazyldisulfide.

5. The rubber laminate according to claim 1, wherein the rubber member *A* contains the vulcanization accelerator by at least 0.1 parts by mass per 100 parts by mass of a rubber component.

6. The rubber laminate according to claim 5, wherein the rubber member *A* contains the vulcanization accelerator by 0.5 parts to 3.0 parts by mass per 100 parts by mass of the rubber component.

7. The rubber laminate according to claim 1, wherein the rubber member *B* contains the vulcanization accelerator in the amount of 0.1 parts by mass or more per 100 parts by mass of a rubber component.

8. The rubber laminate according to claim 7, wherein the rubber member *B* comprises the vulcanization accelerator in the amount of 0.5 parts to 3.0 parts by mass per 100 parts by mass of the rubber component.

9. A run-flat tire comprising: a pair of sidewall portions; a tread portion that continues from each of the sidewall portions; a carcass toroidally extending between the pair of bead portions to reinforce each of the portions; an inner liner disposed on the tire inner surface side of the carcass; a pair of side-reinforcing rubber layers with a crescent-shaped cross-section disposed between the inner surface of the carcass of the sidewall portion and the inner liner,
wherein the rubber laminate according to any of claims 1 to 7 is used, the inner liner is composed of the rubber member *A*, and the side-reinforcing rubber is composed of the rubber member *B*, and
wherein the peeling resistance between the side-reinforcing rubber layer and the inner liner is at least 3.5 N/mm.

10. The run-flat tire according to claim 9, wherein the inner liner has a air permeation coefficient of 6.0*10⁻¹⁰ cm³·cm/cm²sec·cmHg or smaller.

11. A pneumatic tire having a color layer formed on the outside of the tire side portion in the width direction across a barrier layer therebetween, wherein the rubber laminate according to any one of claims 1 to 7 is used, the barrier layer being composed of the rubber member *A*, the rubber of the tire side portion being composed of the rubber member *B*.
